Europäisches Patentamt

European Patent Office

Office européen des brevets

(19)

(11) Veröffentlichungsnummer: **0 024 709**
**A1**

(12) # EUROPÄISCHE PATENTANMELDUNG

(21) Anmeldenummer: **80105015.4**

(22) Anmeldetag: **23.08.80**

(51) Int. Cl.³: **F 16 L 55/16**
**F 16 L 21/06**

(30) Priorität: **28.08.79 DE 2934653**

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **Dümpelman, Franz**
**Südstrasse 2**
**D-4763 Ense-Höingen(DE)**

(72) Erfinder: **Dümpelman, Franz**
**Südstrasse 2**
**D-4763 Ense-Höingen(DE)**

(74) Vertreter: **Fritz, Herbert, Dipl.-Ing.**
**Mühlenberg 74**
**D-5760 Arnsberg 1(DE)**

(54) **Verbindungsschelle mit Dichtungspackung für Gas- und Wasserrohre.**

(57) Zwei gleiche Schalen aus Temperguss werden zu einem Zylinder zusammengesetzt, der bei Rohre (1) an einem Stoß umgibt. An den achsparallelen Rändern der Schalen sind trapezförmige Lappen (15) und eben solche Ausnehmungen (16) angeformt, die ineinandergreifen. In einem Raum (12) zwischen den Schalen und den Rohren (1) ist eine Dichtungspackung untergebracht.

Diese wird beim Festziehen von Verbindungsschrauben (17) zusammengedrückt. Durch das Ineinandergreifen von Lappen (15) und Ausnehmungen (16) wird das Herausquellen der Dichtungspackung im Bereich der Fugen zwischen den Schalen verhindert.

Fig. 3

EP 0 024 709 A1

Patentanwalt

# Dipl.-Ing. H. Fritz

576 NEHEIM-HÜSTEN
Mühlenberg 74

- 1 -    80/333
13.08.1980/Mü

Herrn
Franz Dümpelmann
Südstraße 2

4763 Ense-Höingen

Verbindungsschelle mit Dichtungspackung für Gas-
und Wasserrohre

Die Erfindung bezieht sich auf eine Verbindungsschelle mit Dichtungspackung für Gas- und Wasserrohre, die durch zwei gleiche im Querschnitt halbkreisförmige Schalen aus Metallguss gebildet sind. An den Längsrändern der Schalen sind jeweils in radialer Richtung nach außen vorstehend Flansche gebildet. Eine durch die beiden Schalen gebildete kreiszylindrische Innenfläche liegt an einer Dichtungspackung an, welche die beiden zu verbindenden Rohre umgibt. An jeder Stirnseite einer jeden Schale ist ein Rohrdurchmesser angepasster Steg geformt.

Verbindungsschellen in dieser Art sind an sich als sogenannte Schwerarmaturen bekannt, die man zur Verbindung zweier Gasrohre oder Wasserrohre aus Metall im Durchmesserbereich von 80 mm bis 200 mm verwendet.

/2

Durch die Dichtungspackung soll eine Abdichtung der Stossfuge zwischen den beiden Rohren ergestellt werden. Durch Festziehen der Schrauben erh...cht ...ch die Pressung der Dichtungspackung gegen die Rohre. Solche Schellen werden auch als sogenannte Rohrbruchdichtungsschellen zur Abdichtung einzelner Rohre eingesetzt.

Bei einer Sonderausführung ist an einer Schale ein Flansch angeformt, geeignet zum Ansetzen eines Anschlußrohres, dessen Achse zu dem Rohr, das die Schelle umgibt, einen Winkel von 90$^\circ$ einnimmt.

Bei den bekannten Verbindungsschellen kommt es vor, dass beim Festziehen der Schrauben die Dichtungspackung in radialer Richtung in den Raum zwischen den beiden Flanschen ausweicht, so dass der Anlagedruck der Dichtungspackung an den Rohren in diesem Bereich geringer und die Dichtungswirkung beeinträchtigt ist. Die Gefahr des Herausquellens der Dichtungspackung ist besonders dann gegeben, wenn auf Grund von Toleranzen die Rohrdurchmesser aussergewöhnlich gross sind und die Dichtungspackung besonders stark sind, so dass auch beim Festziehen der Schrauben ein relativ grosser Abstand zwischen den Flanschen der Schalen bleibt.

Die Aufgabe der Erfindung liegt darin, eine Verbindungsschelle der eingangs genannten Art so auszubilden, dass unter allen Umständen beim Festziehen der Schrauben ein radiales Herausquellen der Dichtungspackung vermieden wird.

Diese Aufgabe wird durch die Merkmale des Patentanspruchs gelöst.

Wenn zwei Schalen mit den Merkmalen nach der Erfindung aufeinander gesetzt werden, dann legen sich im Bereich der Schalenlängsränder jeweils die überstehen-

/3

den Lappen der einen Schale in die Ausnehmungen der anderen Schale passend ein, so dass an jeder Seite eine Fortsetzung der kreiszylindrischen Innenwand entsteht, die beim Festziehen auch in diesem Bereich der Packungeinen Widerstand entgegensetzt.

/4

Ein Ausführungsbeispiel der Erfindung wird im forgenden näher beschrieben unter Bezugnahme auf die beiliegenden Zeichnungen.

Fig. 1  zeigt eine Draufsicht auf eine der beiden Schalen der Verbindungsschellen

Fig. 2  ist ein Schnitt nach II-II von Fig. 1

Fig. 3  zeigt einen Schnitt nach III-III von Fig. 1.

Die Verbindungsschelle besteht aus zwei gleichen Schalen aus Temperguss, 4 Verbindungsschrauben und einer Verdichtungspackung. Die Verbindungsschrauben, die Dichtungspackung und die zweite Schale sind nicht dargestellt, weil es zu Verständnis nicht unbedingt erforderlich ist.

Die Verbindungsschelle dient dem Zweck, eine feste und dichte verbindung zwischen zwei gestossenen Rohren 1 herzustellen. Die nicht dargestellte Dichtungspackung ist um die Rohre im Bereich der Stossverbindung herumgelegt. Die beiden Schalen sind so angesetzt, dass die Dichtungspackung eingeschlossen wird. Mit Hilfe von vier Verbindungsschrauben 17 werden die beiden Schalen fest miteinander verbunden. Die Verbindungsschrauben werden durch Bohrungen 14 in Flanschen 13 gesteckt. Beim Festziehen der Schrauben wird die Dichtungspackung fest gegen die Rohrwandungen gedrückt.

An jeder Schale ist eine zylindrische Innenfläche 10 gebildet, die sich im Querschnitt naherzu über einen Halbkreis erstreckt. Diese Fläche ist an den beiden Stirnseiten durch angeformte Stege 11 begrenzt. Während der Radius der zylindrischen Innenfläche etwas grösser als der äussere Rohrdurchmesser

/5

ist, sind die Stege 11 bezüglich ihres Durchmessers dem Rohrdurchmesser angepasst. Durch die beiden Innenflächen 10 der Schalen und durch die Stege 11 wird ein Ringraum 12 zur Aufnahme der Dichtungspackung gebildet.

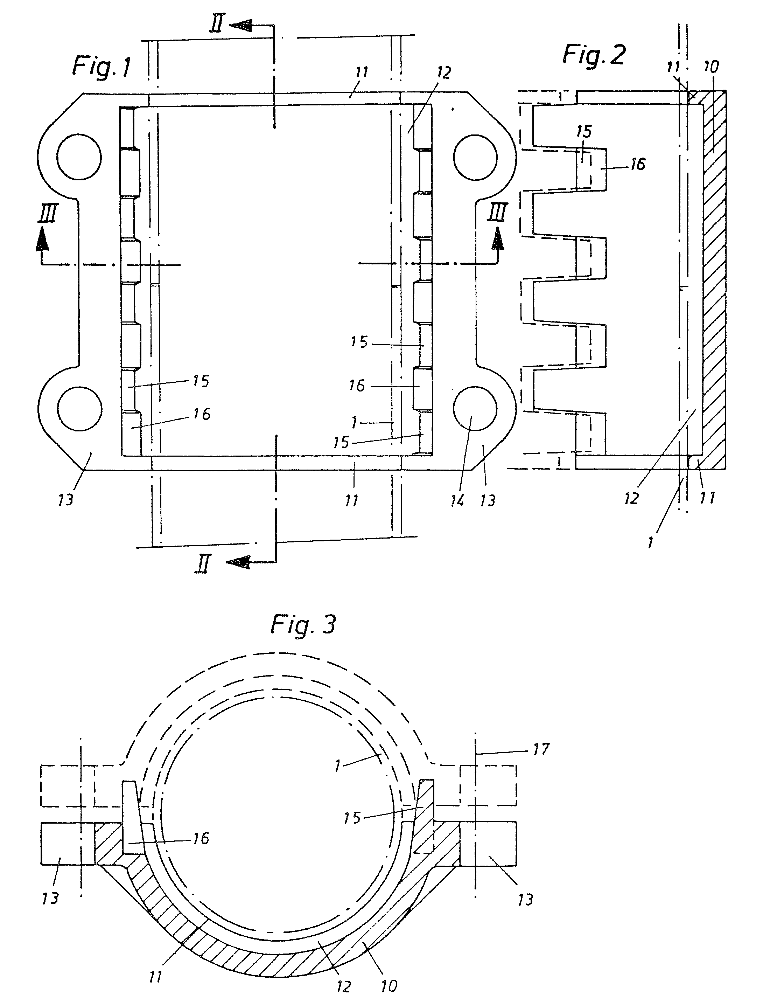

An jedem Schalen-Längsrand sind vier Lappen 15 gebildet, die im Querschnitt über den Halbmesser ragen. Die Lappen haben eine steile Trapezform (Fig. 2), ebenso wie vier zwischen den Lappen angeordnete Ausnehmungen 16, die sich im Bereich unterhalb des Durchmessers erstrecken. Wie man aus Fig. 1 erkennt, liegt an jeder Schale jeweils ein Lappen und eine Ausnehmung einander gegenüber.

Auf Grund dieser Anordnung greifen beim Zusammensetzen der Schalen Lappen 15 und Ausnehmungen 16 derart ineinander, dass im Bereich der Fuge zwischen den Flanschen 13 die kreiszylindrischen Innenwände der Schalen fortgesetzt werden. Dadurch wird ein Herausquellen der Dichtungspackung beim Festziehen der Verbindungsschrauben vermieden.

- 1 -     13.08.1980
80/333

Patentanwalt
## Dipl.-Ing. H. Fritz
576 NEHEIM-HÜSTEN
Mühlenberg 74

P a t e n t a n s p r u c h
=================================

Verbindungsschellen mit Dichtungspackung für Gas-
und Wasserrohre mit den Merkmalen:

- sie besteht aus zwei gleichen im Querschnitt halbkreisförmigen aus Metall gegossenen Schalen, die
  je an jedem Längsrand einen angeformten Flansch
  aufweisen
- eine durch die beiden Schalen gebildete kreiszylindrische Fläche liegt an einer Dichtungspackung
  an, welche die beiden zu verbindenden Rohre
  umgibt
- an jeder Stirnseite einer jeden Schale ist ein
  dem Rohr angepasster Steg gebildet
- es sind Verbindungsschrauben zum Zusammenpressen
  der beiden Schalen vorgesehen gekennzeichnet durch folgende weitere Merkmale:

- im Bereich eines jeden Schalenlängrandes sind abwechselnd überstehende trapezförmige Lappen (15)
  und dazwischen ebenfalls trapezförmige Ausnehmungen (16) von der gleichen Breite wie die
  Lappen geformt
- bei jeder Schale liegt in Querrichtung jeweils
  eine Ausnehmung und ein Lappen einander gegenüber.

Fig.1

Fig.2

Fig. 3

0024709

Nummer der Anmeldung

Europäisches
Patentamt

**EUROPÄISCHER RECHERCHENBERICHT**

EP 80 10 5015.4

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - U - 7 519 851 (DÖRING)<br>* Anspruch 1; Fig. 3, 4 *<br>-- | 1 | F 16 L 55/16<br>F 16 L 21/06 |
| | DE - U - 7 047 759 (H. NAGEL)<br>* Anspruch 1; Fig. 1, 2 *<br>-- | 1 | |
| | DE - U - 1 734 445 (E. PUSPAS)<br>* Anspruch 1; Fig. 1, 2 *<br>-- | 1 | |
| | US - A - 2 776 153 (T.L. SMITH)<br>* Fig. 1 bis 3 *<br>-- | 1 | RECHERCHIERTE SACHGEBIETE (Int. Cl.3) |
| | US - A - 2 690 193 (T.L. SMITH)<br>* Anspruch 1; Fig. 1 bis 3 *<br>-- | 1 | F 16 L 21/00<br>F 16 L 55/00 |
| A | AT - B - 193 205 (O. LAUE)<br>-- | | |
| A | GB - A - 1 290 669 (SYDDAL)<br>-- | | |
| A | US - A - 3 181 900 (W.W. HAYWARD, JR.)<br>---- | | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 23-10-1980 | SCHLABBACH |

EPA form 1503.1 06.78